# EUROPÄISCHE PATENTANMELDUNG

(11) **EP 1 467 012 A2**
(43) Veröffentlichungstag der Anmeldung: **13.10.2004**
(21) Anmeldenummer: 04007953.5
(22) Anmeldetag: 01.04.2004
(51) Int. Cl.: D06F 35/00, D06F 37/04

(54) **Verfahren zum Behandeln von Wäsche in einer Waschtrommel**

(30) Priorität: 11.04.2003 DE 10316879
(71) Anmelder: Diehl AKO Stiftung & Co. KG, 88239 Wangen (DE)
(72) Erfinder: Weinmann, Martin, 88339 Bad Waldsee (DE)
(74) Vertreter: Diehl Patentabteilung

(57) **Zusammenfassung**

Eine von der momentanen Lage der Mitnehmer in der rotierenden Trommel abhängige Drehzahlsteuerung eröffnet einen weiteren Freiheitsgrad beim Einbringen mechanischer Energie in die im Innern der Waschtrommel bewegte Wäsche. Das ermöglicht über Intensität oder Dauer des Waschvorganges eine zusätzliche Optimierung des Waschergebnisses, indem die Interaktion zwischen Waschtrommel und Wäsche nun definiert über der Rotation der Trommeltopographie variiert oder die momentane Trommelbewegung an den aktuellen Interaktionszustand zwischen Mitnehmer und Wäsche angepasst werden kann.

## Beschreibung

Die Erfindung betrifft ein Verfahren gemäß dem Oberbegriff des Anspruches 1.

Ein derartiges Verfahren ist beispielsweise in der DE 100 54 947 Al beschrieben. Dafür ist von der bekannten Tatsache ausgegangen, dass das das Waschergebnis auch wesentlich vom Einführen mechanischer Energie in das Waschgut abhängt. Ein bestimmter Säuberungseffekt wird schneller erreicht, wenn es gelingt, mehr mechanische Energie auf das Waschgut einwirken zu lassen. Insofern ist dort vorgesehen, von einer Trommeldrehrichtung ohne vorübergehenden Stillstand in die entgegengesetzte Drehrichtung des Antriebs umzusteuern, um die noch gegen die Innenwandung der Trommel anliegende , zentrifugalbedingt entfeuchtete Wäsche trägheitsbedingt vorübergehend in der bisherigen Drehrichtung weiter sich bewegen und dadurch für eine Art von Waschbretteffekt über die unterdessen schon gegensinnig drehende Trommelinnenwandung hinweggleiten zu lassen; ehe sie schließlich, mit Verringerung der auf sie wirkenden Zentrifugalkräfte, in den Mittenbereich der Trommel und in die dort stehende Waschlauge zurückfällt, um wieder Lauge ins Gewebe aufzunehmen.

Auf den Einfluss der üblicherweise an der Trommelinnenwandung achsparallel zur horizontal gelagerten Trommel vorgesehenen rippenförmigen Mitnehmer auf die Interaktion zwischen Wäsche und Waschtrommel wird dabei nicht eingegangen. Der Erfindung liegt dagegen die Überlegung zugrunde, dass die ständige Veränderung der momentanen Drehwinkelstellungen der Mitnehmer ebenfalls von nicht zu unterschätzendem Einfluss auf das Einbringen von mechanischer Energie in die Wäsche sein dürfte. Basierend hierauf liegt vorliegender Erfindung die technische Problemstellung zugrunde, diesen Einfluss bei der Wäschebehandlung zusätzlich optimieren zu können.

Diese Aufgabe ist erfindungsgemäß durch die im Hauptanspruch angegebenen Merkmale gelöst. Danach ist einer z.B. zeitabhängig geregelten Drehzahlsteuerung für den Antrieb der um eine etwa horizontale Achse rotierenden Waschtrommel eine von der Momentanstellung der Mitnehmer abhängig schwankende Führungsgröße überlagert. Die kann beispielsweise bewirken, dass die Trommel bei einer bestimmten Winkelstellung der Aufwärtsbewegung eines ihrer Mitnehmer angehalten oder auf entgegengesetzte Drehrichtung umgeschaltet wird, um beispielsweise von der Rippe mitgenommene Wollkleidung nur im Schongang durch die Lauge hin- und herzuziehen, aber nicht über eine volle Trommelumdrehung hinweg herumzuwirbeln. Oder nach Art einer voreilenden Regelung wird das Drehmoment des Antriebsmotors etwas erhöht, unmittelbar bevor mit dem Anheben der Wäsche an einem der Mitnehmer aus der Lauge heraus die potentielle Energie des Systems erhöht wird, um einem Drehzahleinbruch während dieser ansteigenden Belastungsphase vorausschauend entgegenzuwirken und so eine tatsächlich gleichbleibende Trommelrotation unabhängig von der mit den umlaufenden Mitnehmern periodisch variierenden Last zu erzielen. Andererseits kann über diese von der Momentanposition eines der Mitnehmer abhängige Aufschaltung einer Führungsgröße auch eine gezielte Drehzahlveränderung (nämlich in Abhängigkeit von der Momentanstellung der Mitnehmer) hervorgerufen werden, etwa um immer gerade bei in der Horizontalen aus der Lauge auftauchendem, mit Wäsche beladenem Mitnehmer die Momentandrehzahl sofort für eine halbe Trommelumdrehung zu erhöhen und so zentrifugalbedingt die Feuchtigkeit aus der Wäsche möglichst weitgehend herausgedrückt zu haben, wenn sie diametral gegenüberliegend aus der Horizontalen wieder in die Lauge eintritt.

Zur Detektion der momentanen Mitnehmerstellung kann darauf zurückgegriffen werden, dass der erhöhte Leistungsbedarf im Moment des Anhebens eines mit Wäsche beladenen Mitnehmers, zumal aus dem Auftriebseffekt der Waschlauge hinaus, zu einem signifikanten Stromanstieg im Motorstromkreis für den Antrieb der Trommel führt, der meßtechnisch erfasst und als Sensorsignal für das Erreichen einer bestimmten Drehstellung eines jeden der beispielsweise drei Mitnehmern nacheinander auswertbar ist.

Es kann aber die räumliche Lage der durch die rippenförmigen Mitnehmer bestimmten Trommeltopologie auch unmittelbar detektiert werden, etwa indem wenigstens einer der Mitnehmer in der Trommel oder die Trommel selbst oder das mit der Trommel drehfest verbundene Riemenrad oder der Rotor eines Direktantriebmotors für die Trommel mit einem beispielsweise magnetischen, elektrodynamischen oder optoelektronischen Indikator ausgestattet wird, auf dessen Passage ein maschinenfest angeordneter Sensor anspricht. Der Sensor ist dafür beispielsweise als Reed-Relais oder als Induktionsschaltung ausgelegt, wenn ein an der Trommel befestigter Permanentmagnet die Sensorstellung passiert, oder als Lichtschranke für eine mit der Trommel rotierende Abschattungsfahne bzw. Reflektorfahne.

Sofern die Trommel mit einem Inkrementalgeber für deren Drehbewegung (Drehzahl und Drehrichtung) ausgestattet ist, also mit einer Folge von längs des Trommelumfanges gleichmäßig verteilten und auf einen gerätefesten Annäherungssensor wirkenden Aktuatoren, dann sind spezielle Trommeltopologien bestimmten Zählstellungen eines dem Annäherungssensor nachgeschalteten Impuls-Zählers zugeordnet. Wenn also etwa zu Bewegungsbeginn dem Zähler zu einer aktuellen Trommelstellung ein bestimmter Zählwert, insbesondere der Zählwert NULL, aufgeschaltet wird, dann sind die Anordnungen der Mitnehmer in der Trommel bestimmten Zählergebnissen zugeordnet, im Falle von drei Mitnehmern etwa den Werten 0, 120 und 240 bei 359 Inkrementalstellungen pro Trommelumdrehung. Solch eine Ausgangszuordnung lässt sich automatisch realisieren. Das basiert dann darauf, dass die Beladung der gedrehten Trommel aufgrund der variablen Interaktion zwischen der Wäsche und den gleichmäßig über die Trommelinnenwandung verteilten Mitnehmern bei konstanter Speisung des Trommelantriebsmotors aufgrund der Drehmomentenschwankungen zu problemlos erfaßbaren Drehzahlschwankungen führt, die für die momentanen Lagen der Mitnehmer repräsentativ sind; weshalb das Auftreten einer solchen Schwankung als Anfangswert für den Zählvorgang des Inkrementalgebers gesetzt werden kann. Hierfür kann aber auch die Feststellung dienen, dass die äquidistant montierten Inkrementalgeber-Aktuatoren trommeltopographieabhängig periodisch zu einem Absinken der Folgefrequenz ihrer aufzusummierenden Inkrementalimpulsfolge führen, so dass für das Nullsetzen des Inkrementalzählers kein etwa tachometrisches Drehzahlmeßgerät oder leistungserfassendes Drehmomentenmessgerät eingesetzt werden muß.

Eine weitere bevorzugte Lösung ist dadurch gegeben, dass in den Inkrementalgeber bewusst eine oder mehrere Fehlstellen eingearbeitet sind (z.B. eine Bahn mit doppelter Impulsperiodendauer), wobei die Fehlstellen mechanisch auf die Trommeltopologie synchronisiert sind, und diese Synchronität in der Steuerung für den Antrieb hinterlegt ist. Des weiteren ist in der Steuerung hinterlegt, bei welchen Inkrementalzählerständen die Fehlstellen auftreten, um die Fehlstellen über Softwarefilter auszugleichen. Wenn die Steuerung nach dem Power-On-Reset das erste Mal anläuft, erfolgt dann die Trommelansteuerung mit konstanter Drehzahl/Frequenz, um den Inkrementalzähler auf die Fehlstellen synchronisieren zu können.

Bezüglich weiterer Alternativen und Vorteile der erfindungsgemäßen Lösung wie zum Erkennen der Momentanposition eines Trommelmitnehmers und der davon abhängigen Beeinflussung der Drehzahlsteuerung wird auf die Unteransprüche verwiesen.

Im Ergebnis führt also die erfindungsgemäß von der momentanen Lage der Mitnehmer in der rotierenden Trommel abhängige Drehzahlsteuerung zu einem weiteren Freiheitsgrad beim Einbringen mechanischer Energie in die im Innern der Waschtrommel bewegte Wäsche. Das eröffnet über Intensität oder Dauer des Waschvorganges eine zusätzliche Optimierung des Waschergebnisses, indem die Interaktion zwischen Waschtrommel und Wäsche nun über der Rotation der Trommeltopographie variiert oder die Trommelbewegung an den momentanen Interaktionszustand zwischen Mitnehmer und Wäsche angepasst werden kann.

## Patentansprüche

1. Verfahren zum Behandeln von in einer elektromotorisch angetriebenen Waschtrommel, mit rippenförmigen achsparallelen Mitnehmern an der Trommelinnenwandung, zum Einbringen von mechanischer Energie verwirbelter Wäsche,
**dadurch gekennzeichnet,**
**dass** die Steuerung des Trommelantriebsmotors der Waschtrommel in Abhängigkeit von der momentanen Drehstellung der Mitnehmer variiert wird.

2. Verfahren nach Anspruch 1,
**dadurch gekennzeichnet,**
**dass** Leistungsaufnahme, Motorstrom oder Drehzahl des Trommelantriebsmotors aufgrund ihrer von der Topographie der beladenen Trommel abhängigen Schwankung als drehstellungsabhängiges Signal ausgewertet werden.

3. Verfahren nach Anspruch 1,
**dadurch gekennzeichnet,**
**dass** die momentane räumliche Lage der Mitnehmer mittels ihnen an der Trommel zugeordneter Indikatoren sensiert wird.

4. Verfahren nach Anspruch 3,
**dadurch gekennzeichnet,**
**dass** magnetische, elektrodynamische oder optoelektronische Lagesensoren an mit der Trommel drehstarr verbundenen Riemenrad oder Rotor des Direktantriebmotors eingesetzt werden.

5. Verfahren nach Anspruch 1,
**dadurch gekennzeichnet,**
**dass** die momentane räumliche Lage der in der Trommel angeordneten Mitnehmer aus einem inkrementalen Zählergebnis für die Trommelbewegung abgeleitet wird.

6. Verfahren nach Anspruch 5,
**dadurch gekennzeichnet,**
**dass** ein Inkrementalgeber vom Auftreten einer Drehzahl- oder Drehmomentenschwankung beim Antreiben der beladenen Trommel initiiert wird.

7. Verfahren nach Anspruch 5,
**dadurch gekennzeichnet,**
**dass** drehmomentenabhängige Schwankungen in der Inkrementalgebersignalfolge zu einer drehstellungsabhängigen Initialisierung eines Inkrementalgebers herangezogen werden.

8. Verfahren nach einem der Ansprüche 5 bis 7,
**dadurch gekennzeichnet,**
**dass** im Inkrementalgeber räumlich auf die Trommeltopologie synchronisierte Fehlstellen vorgesehen sind, auf die der Inkrementalgeber zu Betriebsbeginn initialisiert wird, die dann während des Betriebes aufgrund ihrer dann vorbekannten Positionierung im Zählablauf ausgefiltert werden.

9. Verfahren nach einem der vorangehenden Ansprüche,
**dadurch gekennzeichnet,**
**dass** die Drehzahlvorgabe für den Trommelantriebsmotor in Abhängigkeit von der momentanen Drehstellung der Mitnehmer variiert wird.

10. Verfahren nach einem der vorangehenden Ansprüche,
**dadurch gekennzeichnet,**
**dass** das Drehmoment des Antriebsmotors in Abhängigkeit von der momentanen Drehstellung der Mitnehmer variiert wird.
